# EUROPÄISCHE PATENTSCHRIFT

(11) **EP 0 888 983 B1**
(45) Veröffentlichungstag und Bekanntmachung des Hinweises auf die Patenterteilung: **21.03.2001**
(21) Anmeldenummer: 98100244.7
(22) Anmeldetag: 09.01.1998
(51) Int. Cl.: B65G 1/08

(54) **Durchlaufregal zum Kommissionieren**
Gravity feed rack for order picking
Couloir de roulement pour la préparation de commandes

(30) Priorität: 04.07.1997 DE 29711710 U
(43) Veröffentlichungstag der Anmeldung: 07.01.1999
(73) Patentinhaber: NEDCON MAGAZIJNINRICHTING B.V., NL-7000 AA Doetinchem (NL)
(72) Erfinder: Hollander, Rudolf Richard, 7251 KC Vorden (NL)
(74) Vertreter: Stenger, Watzke & Ring Patentanwälte

(56) Entgegenhaltungen:
- EP-A- 0 241 579
- DE-A- 3 832 776
- DE-U- 9 305 450
- DE-U- 29 711 710
- GB-A- 1 470 439
- US-A- 4 182 440

## Beschreibung

Die Erfindung betrifft ein Durchlaufregal zum Kommissionieren von Lagereinheiten, insbesondere an einem Wechselplatz, mit vorzugsweise in mehreren Ebenen übereinander angeordneten und zur Kommissionierseite hin geneigten Laufbahnen, auf denen die Lagereinheiten unter Schwerkrafteinfluß von der Beschickungsseite direkt in eine Entnahmeposition gelangen, und jeweils mindestens einer an den Laufbahnen angeordneten Sperre, durch die eine Lagereinheit in einer der Entnahmeposition in Bewegungsrichtung vorgelagerten Position arretierbar ist.

Durchlaufregale sind durch feststehende Lagergestelle und bewegte Lagereinheiten gekennzeichnet. Unter einer Lagereinheit sind im Rahmen der vorliegenden Anmeldung sämtliche Arten an Sichtlagerkästen, Stapelbehältern mit und ohne Sichtöffnung, Lager- und Transportbehältern sowie Kartons und Einzelgebinden zu verstehen, in welchen Lagergut aufbewahrt wird. Durchlaufregale eigenen sich als Kommissionierregale vor allem aufgrund der zu erzielenden hohen Umschlaghäufigkeit sowie des hohen Flächen- und Raumnutzungsgrades. Zum Kommissionieren werden dabei die Durchlaufregale von der Beschickungsseite mit Lagereinheiten beladen, während eine bedarfsorientierte Entnahme auf der gegenüberliegenden Kommissionierseite erfolgt. Hinsichtlich der Abwicklungsform kann zwischen einer einstufigen oder auftragsbezogenen und einer mehrstufigen oder artikelbezogenen Kommissionierung unterschieden werden. Beim auftragsbezogenen Kommissionieren wird ein Auftrag in einem Arbeitsprozeß zusammengestellt, d.h. die Positionen eines Auftrages werden zusammenhängend erledigt. Beim artikelbezogenen Kommissionieren hingegen werden in einer ersten Stufe gleiche Artikel für mehrere Aufträge gesammelt und in einer zweiten Stufe den entsprechenden Aufträgen zugeordnet. Vor allem in letzteren Fall werden die Kommissionierstationen als Wechselplätze betrieben, bei denen der Arbeitsplatz des Kommissionierers ortsfest ist und die Warenbereitstellung dynamisch erfolgt, d.h. das Lagergut wird beispielsweise mittels Regalförderzeugen aus seinem Lagerort herausgeholt und der Kommissionierstation zugeführt.

Im Stand der Technik ist es hierzu bekannt, daß eine an einem Durchlaufregal bereitgestellte Lagereinheit von der Beschickungsseite unter Schwerkrafteinfluß in die Entnahmeposition an der Kommissionierseite bewegt wird und nach erfolgtem Kommissionieren in eine Warteposition geschoben wird, um von dort aus wieder von einem Regalförderzeug abgeholt zu werden. Dies ist jedoch mit dem Nachteil verbunden, daß zum Festhalten der Lagereinheit in der Warteposition, eine Sperrvorrichtung durch den Kommissionierer zu betätigen ist. Diese für den Kommissionierer einen zusätzlichen Handgriff darstellende Betätigung der Sperrvorrichtung schlägt sich sowohl in einer reduzierten Kommissionierleistung als auch in einem erhöhten Konzentrationsaufwand und damit in einer gesteigerten Streßbelastung für den Kommissionierer nieder.

Der Erfindung liegt die **Aufgabe** zugrunde, ein Durchlaufregal der eingangs beschriebenen Art dahingehend weiterzubilden, daß das Betätigen der Sperre für den Kommissionierer entfällt und damit eine höhere Kommissionierleistung bei gleichzeitig reduzierter Streßbelastung für den Kommissionierer gewährleistet wird.

Die **Lösung** dieser Aufgabe ist erfindungsgemäß dadurch gekennzeichnet, daß die Sperre durch einen um eine ortsfeste Drehachse schwenkbaren Winkel gebildet wird, der mittels mindestens einer Feder in einer Grundstellung gehalten wird, aus der heraus er in gegensinnigen Schwenkrichtungen entgegen der Kraft der Feder verschwenkbar ist, wobei die Sperre durch das Entlangbewegen einer Lagereinheit gegen die Wirkung der Feder aus der Grundstellung auslenkbar ist, und wobei zwischen den schenkelartigen Gliedern der Sperre ein von der Entnahmeposition zur vorgelagerten Position zurückbewegte Lagereinheit selbsttätig einklemmbar ist.

Durch eine solche erfindungsgemäße Ausgestaltung wird ein Durchlaufregal geschaffen, das eine selbsttätige Sperre aufweist, die ein erstes Bewegen einer Lagereinheit von der Beschickungsseite direkt in die Entnahmeposition ermöglicht und ein abermaliges Bewegen der betreffenden Lagereinheit zurück in die Entnahmeposition nach erfolgtem Kommissionieren und Zurückschieben über die Position der Sperre hinaus verhindert, indem die durch die Entlangbewegung der Lagereinheit ausgelenkte Sperre nach Passieren der Lagereinheit so wieder zurückschnellt, daß eine Kante der Lagereinheit zwischen den schenkelartigen Gliedern der Sperre eingeklemmt wird.

In einer bevorzugten Ausführungsform sind die den Winkel bildenden schenkelartigen Glieder der Sperre unter einem rechten Winkel zueinander ausgerichtet, so daß eine optimale Anpassung an die gängigsten Formen der Lagereinheiten gewährleistet ist.

Vorteilhafterweise ist das in der Grundstellung der Kommissionierseite zugewandte schenkelartige Glied der Sperre kürzer als das der Kommissionierseite abgewandte, um ein Einklemmen einer Kante der Lagereinheit beim Zurückschnellen der Sperre sicherzustellen.

Gemäß einem weiteren Merkmal der Erfindung ist die Sperre seitlich der Laufbahn mit vertikaler Drehachse angelenkt, um eine besonders einfache und schnelle Montage zu gewährleisten. Zweckmäßigerweise sind Sperren beidseitig der Laufbahn angeordnet, so daß ein gleichmäßiges, verkantungsfreies Arretieren gegeben ist.

Von besonderem Vorteil ist es, wenn die Feder eine beidseitig fest eingespannte Schenkelfeder ist, so daß sich eine gleichmäßige Biegebeanspruchung und damit eine langlebige Funktionssicherheit erzielen läßt.

Bei einer bevorzugten Ausgestaltung der Erfindung ist in einem Abstand von der Sperre ein die Zurückbewegung einer Lagereinheit von der Entnahmeposition in Richtung der vorgelagerten Position begrenzender Anschlag vorgesehen, der die Funktionsweise der Sperre sicherstellt, indem verhindert wird, daß die Lagereinheit zu weit zurückgeschoben wird und dadurch nicht mehr eine Kante der betreffenden Lagereinheit zwischen ihren schenkelartigen Gliedern aufnehmen kann. Eine besonders einfache und schnelle Realisierung eines derartigen Anschlags ergibt sich, wenn der Anschlag als federbetätigte Klappe ausgebildet ist, die ein Bewegen einer Lagereinheit von der Beschickungsseite zur Entnahmeposition gestattet, in der umgekehrten Richtung jedoch, ein erst durch ein Regalförderzeug zu überwindendes Hindernis darstellt. Gemäß einer alternativen Ausführungsform der Erfindung ist der Anschlag über ein Zugmittelgetriebe mit der Sperre verbunden, so daß durch die Auslenkung der Sperre bei Bewegung einer Lagereinheit von der Entnahmeposition zurück in Richtung der vorgelagerten Position ein Herausklappen des Anschlags gegeben ist und bei Zurückschnellen der Sperre in ihre Arretierstellung ein Absenken des Anschlags stattfindet. Dies bietet den Vorteil, daß ein Regalförderzeug nicht ausgelegt sein muß, bei Zurücknahme der Lagereinheit den Anschlag überwinden zu können.

Schließlich wird vorgeschlagen, daß die Laufbahnen als Rollenbahnen ausgestattet sind, um ein schnelles und effektives Bewegen der Lagereinheiten von der Beschickungsseite zur Entnahmeposition unter Schwerkrafteinfluß zu gewährleisten.

Weitere Vorteile und Einzelheiten des Gegenstandes der Erfindung ergeben sich aus der nachfolgenden Beschreibung der zugehörigen Zeichnung, in der eine bevorzugte Ausführungsform dargestellt ist, und zwar zeigt:
- Fig. 1: eine Sperre in verschiedenen Positionen in einer Draufsicht;
- Fig. 1a: die Sperre in einer Seitenansicht;
- Fig. 2: die Grundstellung der Sperre bei Bewegung einer Lagereinheit von der Beschickungsseite zur Entnahmeposition in einer schematischen Draufsicht;
- Fig. 2a: einen vergrößerten Ausschnitt des in Fig. 2 mit lla bezeichneten Bereiches;
- Fig. 3: die Sperre in einer ausgelenkten Stellung bei Passieren einer Lagereinheit in einer schematischen Draufsicht;
- Fig. 3a: einen vergrößerten Ausschnitt des in Fig. 3 mit IIIa bezeichneten Bereiches;
- Fig. 4: die Stellung der Sperre bei Beginn des Zurückbewegens einer Lagereinheit von der Entnahmeposition in Richtung der vorgelagerten Position in einer schematischen Draufsicht;
- Fig. 4a: einen vergrößerten Ausschnitt des in Fig. 4 mit IVa bezeichneten Bereiches;
- Fig. 5: die Sperre in einer ausgelenkten Stellung bei Zurückbewegen einer Lagereinheit von der Entnahmeposition in Richtung der vorgelagerten Position in einer schematischen Draufsicht;
- Fig. 5a: einen vergrößerten Ausschnitt des in Fig. 5 mit Va bezeichneten Bereiches;
- Fig. 6: die Sperre in ihrer Arretierstellung mit eingeklemmter Lagereinheit in einer schematischen Draufsicht;
- Fig. 6a: einen vergrößerten Ausschnitt des in Fig. 6 mit VIa bezeichneten Bereiches;
- Fig. 7: eine schematische Darstellung eines Kommissionierwechselplatzes;
- Fig. 8: einen vergrößerten Ausschnitt des in Fig. 7 mit VIII bezeichneten Bereiches in einer schematischen Darstellung und
- Fig. 8a: eine alternative Ausführungsform des in Fig. 7 mit VIII bezeichneten Bereiches in einer schematischen Darstellung.

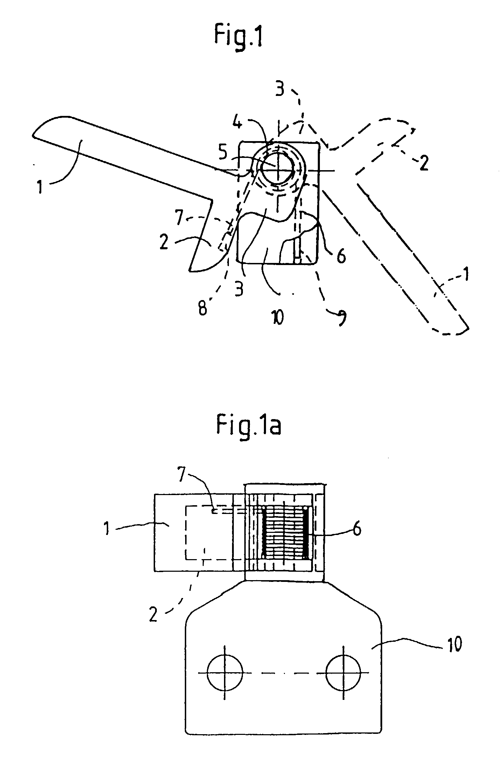

Die in Fig. 1 in zwei verschiedenen Stellungen dargestellte Sperre besteht aus einem im wesentlichen winkelartigen Anschlag, der die schenkelartigen Glieder 1 und 2 aufweist, welche sich unter einem rechten Winkel zueinander erstrecken. Im Bereich der Verbindungsstelle der beiden Glieder 1 und 2 ist die Sperre mit einer Verbreiterung 3 versehen, die eine Öffnung 4 für eine Drehachse 5 umfaßt. Dabei ist die Verbreiterung 3 so ausgebildet, daß die Drehachse 5 außerhalb des Schnittpunktes der Längsachsen der beiden schenkelartigen Glieder 1, 2 zu liegen kommt. Durch diese außerzentrische Anordnung der Drehachse 5 ergeben sich bei Entlangbewegen einer Lagereinheit geringere Verschwenkwinkel als wenn beispielsweise die Drehachse 5 genau im Schnittbereich der beiden schenkelartigen Glieder 1, 2 angeordnet wäre. Die Größe des Auslenkwinkels ist dabei abhängig von der Entfernung eines schenkelartigen Gliedes 1, 2 von der Drehachse 5. Geringe Verschwenkwinkel bieten den Vorteil, daß aufgrund der damit verbundenen kürzeren Verschwenkzeit ein schnelles Einschwenken der Sperre in die Arretierstellung bzw. in die Grundstellung sichergestellt ist. Die Enden der schenkelartigen Glieder 1, 2 sind auf der mit einer Lagereinheit in Berührung kommenden Seite abgerundet, so daß sich in der Grundstellung der Sperre eine günstige, da kantenfreie Anschlagszone ergibt. Wie auch Fig. 1a zu entnehmen ist, ist die Drehachse 5 mit einer gewundenen Schenkelfeder 6 umgeben, deren eines Ende 7 in einer Bohrung 8 im Glied 2 steckt und deren anderes Ende 9 an einer Befestigungsplatte 10 fest eingespannt ist.

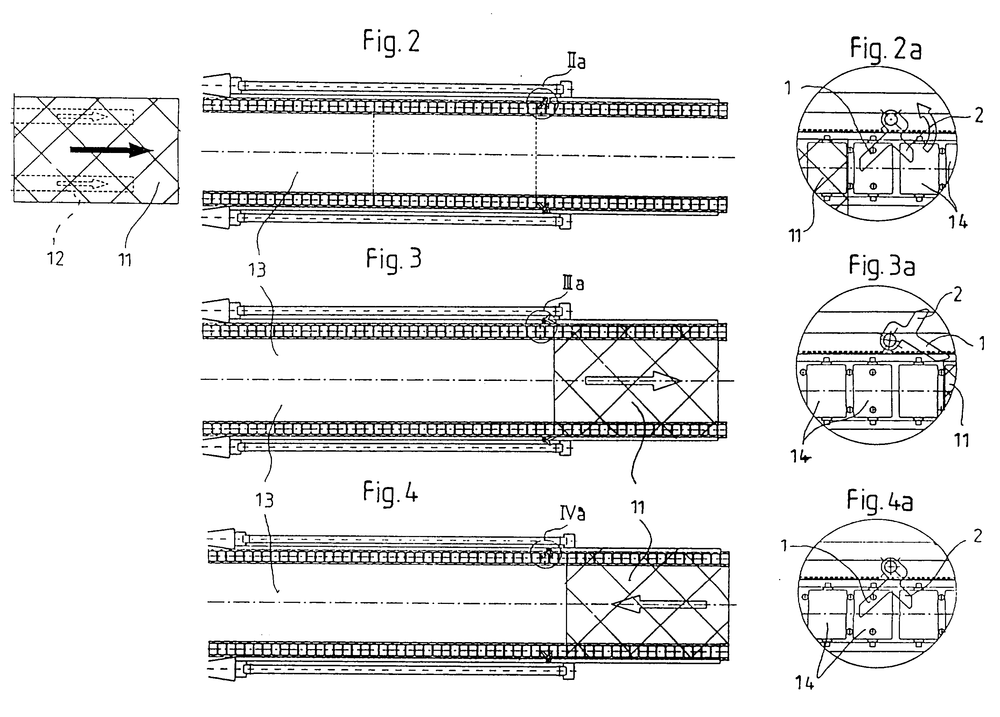

In den Figuren 2 bis 6 ist die Funktionsweise der Sperre anhand eines Kommissioniervorganges dargestellt. Fig. 2 zeigt die Ausgangsstellung, bei der eine Lagereinheit 11 mittels eines Regalförderzeugs 12 an der Beschickungsseite eines Durchlaufregals bereitgestellt wird. Eine Laufbahn 13 eines Durchlaufregals ist mit Führungsrollen 14 versehen, die ein rasches und reibungsarmes Bewegen einer Lagereinheit 11 von der Beschickungsseite zur gegenüberliegenden Entnahmeposition sicherstellt. Die in einem Abstand von etwas mehr als der Länge einer Lagereinheit von der Entnahmeposition entfernt angeordneten Sperren umfassen beidseitig der Laufbahn sich gegenüberliegende Winkel, deren schenkelartigen Glieder 1, 2 in der Grundstellung zur Laufbahnmitte hin geöffnet orientiert sind, wie in Fig. 2a besonders gut zu erkennen ist.

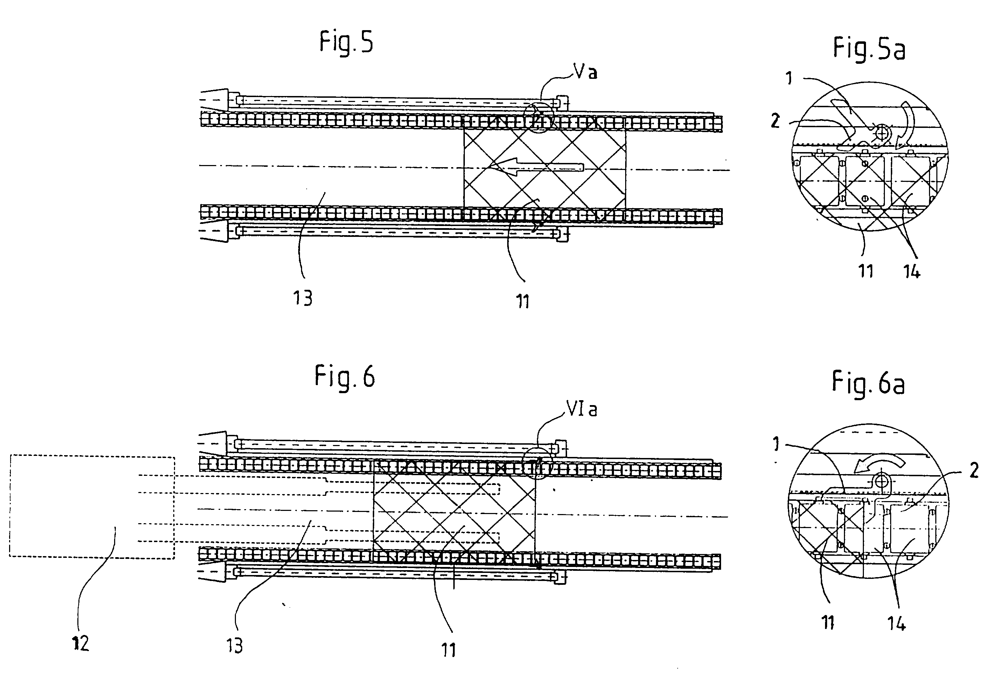

Passiert die Lagereinheit 11 die Sperre, so werden die schenkelartigen Glieder 1, 2 in der durch den Pfeil in Fig. 2a angedeuteten Richtung gegen die Wirkung der Schenkelfeder 6 ausgelenkt und die Lagereinheit 11 läuft entlang der Sperre in die Entnahmeposition vorbei. Sobald die in Bewegungsrichtung der Lagereinheit 11 rückwärtige Kante der Lagereinheit 11 an der Sperre vorbei ist, schnellt diese wieder in ihre Grundstellung zurück, was in den Fig. 4 und 4a zu erkennen ist. Nachdem an der Entnahmeposition kommissioniert worden ist, wird die Lagereinheit 11 durch den Kommissionierer gegen die Wirkung der Schwerkraft entlang der Laufbahn 13 zurückgeschoben. Die schenkelartigen Glieder 1, 2 der Sperre werden nun in entgegengesetzter Richtung ausgelenkt, was die Fig. 5 und 5a erkennen lassen. Bei Erreichen der in Bewegungsrichtung rückwärtigen Kante der Lagereinheit 11 wird diese zwischen den beiden schenkelartigen Gliedern 1, 2 durch die Rückbewegung der Sperre in ihre Grundstellung eingeklemmt, was in den Fig. 6 und 6a veranschaulicht ist. Um zu verhindern, daß die Sperre an der rückwärtigen Kante der Lagereinheit 11 vorbeischnellt, ist zum einen das in der Grundstellung der Kommissionierseite zugewandte schenkelartige Glied 2 der Sperre kürzer als das Glied 1 und zum anderen an der Laufbahn 13 ein Anschlag 15 vorgesehen, der bei Bewegung der Lagereinheit 11 von der Entnahmeposition in Richtung der Beschickungsseite die Lagereinheit 11 daran hindert, daß sie so weit zurückbewegt wird, daß auch das längere schenkelartige Glied 1 hinter die in Bewegungsrichtung rückwärtige Seite der Lagereinheit 11 schnellen kann. Durch die Neigung der Laufbahn 13 und die damit infolge der Gewichtskraft hervorgerufene Abtriebskraft ist gewährleistet, daß sich die Lagereinheit 11 an das schenkelartige Glied 2 andrückt. Dadurch wird gleichzeitig ein Drehmoment erzeugt, das das schenkelartige Glied 1 an die Längsseite der Lagereinheit 11 anpreßt, so daß eine wirkungsvolle Arretierung der Lagereinheit 11 gegeben ist, die jedoch jederzeit eine einfache Entnahme der Lagereinheit 11 in Richtung der Beschickungsseite gestattet. Indem beidseitig der Laufbahn 13 derartige Sperren mit schenkelartigen Gliedern 1, 2 angeordnet sind, ist ein verkantungsfreies Arretieren der Lagereinheit 11 sichergestellt.

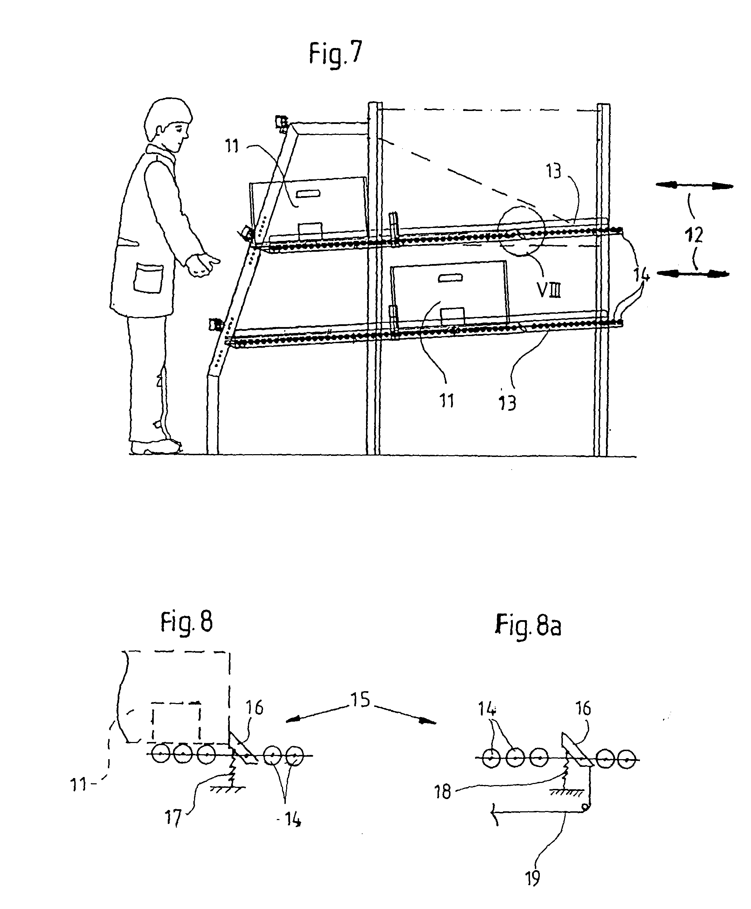

Die Fig. 7 bis 8a zeigen in schematischer Weise die Anordnung und Funktionsweise des Anschlags 15. Die in Fig. 8 dargestellte Ausführungsform umfaßt eine gelenkig gelagerte Klappe 16, die mittels einer Druckfeder 17 aus der Ebene der Führungsrollen 14 heraussteht.

Bei Bewegung einer Lagereinheit 11 von der Beschickungsseite in Richtung der Entnahmeposition wird die Klappe 16 gegen die Wirkung der Druckfeder 17 hinunter gedrückt, so daß die Lagereinheit 11 hindernisfrei über den Anschlag 15 hinwegrollen kann und nach Passieren der Lagereinheit 11 der Anschlag 15 wieder aufgerichtet wird. Bei umgekehrter Bewegung von der Entnahmeposition in Richtung der Beschickungsseite stellt die Klappe 16 ein Hindernis dar, das erst durch Anheben der Lagereinheit 11, beispielsweise mit Hilfe des Regalförderzeugs 12, überwunden werden kann.

Die in Fig. 8a dargestellte alternative Ausführungsform des Anschlags 15 besteht aus einer gelenkig gelagerten Klappe 16, die mittels einer Zugfeder 18 in der Ebene der Führungsrollen 14 angeordnet ist. Über ein Zugmittelgetriebe 19 oder ähnliches ist die Klappe 16 mit der Sperre verbunden. Durch die Auslenkung der Sperre bei Bewegung der Lagereinheit 11 von der Entnahmeposition in Richtung Beschickungsseite wird diese Drehbewegung über das Zugmittelgetriebe 19 an den Anschlag 15 in der Art übertragen, daß sich die Klappe 16 gegen die Wirkung der Zugfeder 18 aus der Ebene der Führungsrollen 14 heraushebt und damit einen Anschlag für die Lagereinheit 11 bildet. Aufgrund des Zurückschnellens der Sperre in die Arretierstellung senkt sich die Klappe 16 infolge der Wirkung der Zugfeder 19 wieder in die Ebene der Führungsrolle 14, so daß die Lagereinheit 11 ohne Überwindung des Anschlags 15 mittels beispielsweise des Regalförderzeugs 12 entnommen werden kann.

Das erfindungsgemäße Durchlaufregal zeichnet sich durch eine besonders bedienerfreundliche Handhabung aus, indem die Sperre selbsttätig eine Lagereinheit 11 in einer der Entnahmeposition vorgelagerten Position arretiert bis ein Regalförderzeug 12 die Lagereinheit 11 wieder ihrem Lagerort zuführt. Neben dieser vereinfachten Handhabung und einer damit verbundenen Zeiteinsparung erhöht sich auch die Produktivität des einzelnen Kommissionierers durch die verringerte Streßbelastung und die gesteigerte Konzentration bei der Ausführung der Arbeit, so daß insgesamt auch einer Verringerung der Kommissionierfehler Rechnung getragen wird.

## Patentansprüche

1. Durchlaufregal zum Kommissionieren von Lagereinheiten (11), insbesondere an einem Wechselplatz, mit vorzugsweise in mehreren Ebenen übereinander angeordneten und zur Kommissionierseite hin geneigten Laufbahnen (13), auf denen die Lagereinheiten (11) unter Schwerkrafteinfluß von der Beschickungsseite direkt in eine Entnahmeposition gelangen, und jeweils mindestens einer an den Laufbahnen (13) angeordneten Sperre, durch die eine Lagereinheit (11) in einer der Entnahmeposition in Bewegungsrichtung vorgelagerten Position arretierbar ist,
**dadurch gekennzeichnet,**
daß die Sperre durch einen um eine ortsfeste Drehachse (5) schwenkbaren Winkel gebildet wird, der mittels mindestens einer Feder in einer Grundstellung gehalten wird, aus der heraus er in gegensinnigen Schwenkrichtungen entgegen der Kraft der Feder verschwenkbar ist, wobei die Sperre durch das Entlangbewegen einer Lagereinheit (11) gegen die Wirkung der Feder aus der Grundstellung auslenkbar ist, und wobei zwischen den schenkelartigen Gliedern (1, 2) der Sperre eine von der Entnahmeposition zur vorgelagerten Position zurückbewegte Lagereinheit (11) selbsttätig arretierbar ist.

2. Durchlaufregal nach Anspruch 1, dadurch gekennzeichnet, daß die den Winkel bildenden schenkelartigen Glieder (1, 2) der Sperre unter einem rechten Winkel zueinander ausgerichtet sind.

3. Durchlaufregal nach einem der Ansprüche 1 oder 2, dadurch gekennzeichnet, daß das in der Grundstellung der Kommissionierseite zugewandte schenkelartige Glied (2) der Sperre kürzer ist als das der Kommissionierseite abgewandte (1).

4. Durchlaufregal nach einem der Ansprüche 1 bis 3, dadurch gekennzeichnet, daß die Sperre seitlich der Laufbahn (13) mit vertikaler Drehachse (5) angelenkt ist.

5. Durchlaufregal nach Anspruch 4, dadurch gekennzeichnet, daß Sperren beidseitig der Laufbahn (13) angeordnet sind.

6. Durchlaufregal nach einem der Ansprüche 1 bis 5, dadurch gekennzeichnet, daß das Federelement eine beidseitig fest eingespannte Schenkelfeder (6) ist.

7. Durchlaufregal nach einem der Ansprüche 1 bis 6, dadurch gekennzeichnet, daß in einem Abstand von der Sperre ein die Zurückbewegung einer Lagereinheit (11) von der Entnahmeposition in Richtung der vorgelagerten Position begrenzender Anschlag (15) vorgesehen ist.

8. Durchlaufregal nach Anspruch 7, dadurch gekennzeichnet, daß der Anschlag (15) als federbetätigte Klappe (16) ausgebildet ist.

9. Durchlaufregal nach Anspruch 7, dadurch gekennzeichnet, daß der Anschlag (15) über ein Zugmittelgetriebe (19) mit der Sperre verbunden ist.

10. Durchlaufregal nach einem der vorhergehenden Ansprüche, dadurch gekennzeichnet, daß die Laufbahnen (13) als Rollenbahnen ausgebildet sind.

## Claims

1. Dynamic-storage rack for order-picking from storage units (11), in particular at a changeover location, having running tracks (13) which are preferably arranged one above the other on a number of levels, are inclined in the direction of the order-picking side and on which the storage units (11) pass directly into a removal position from the charging side under the influence of gravitational force, and having in each case at least one barrier which is arranged on the running tracks (13) and by means of which a storage unit (11) can be arrested in a position upstream of the removal position, as seen in the movement direction, characterized in that the barrier is formed by an angle element which can be pivoted about a stationary rotary spindle (5) and is kept in a basic position by means of at least one spring, it being possible for said angle element to be pivoted out of the basic position in opposite pivoting directions counter to the force of the spring, it being possible for the barrier to be deflected from the basic position, counter to the action of the spring, by a storage unit (11) moving past it, and it being the case that a storage unit (11) moved back from the removal position to the upstream position can be arrested automatically between the leg-like members (1, 2) of the barrier.

2. Dynamic-storage rack according to Claim 1, characterized in that the angle-element-forming leg-like members (1, 2) of the barrier are aligned at right angles to one another.

3. Dynamic-storage rack according to either of Claims 1 and 2, characterized in that the leg-like barrier member (2), which is directed towards the basic position of the order-picking side, is shorter than the barrier member (1), which is directed away from the order-picking side.

4. Dynamic-storage rack according to one of Claims 1 to 3, characterized in that the barrier is articulated to the side of the running track (13) with the rotary spindle (5) in the vertical direction.

5. Dynamic-storage rack according to Claim 4, characterized in that barriers are arranged on both sides of the running track (13).

6. Dynamic-storage rack according to one of Claims 1 to 5, characterized in that the spring element is a leg spring (6) which is clamped in firmly on both sides.

7. Dynamic-storage rack according to one of Claims 1 to 6, characterized in that a stop (15) which limits the backward movement of a storage unit (11) from the removal position in the direction of the upstream position is provided at a distance from the barrier.

8. Dynamic-storage rack according to Claim 7, characterized in that the stop (15) is designed as a spring-actuated flap (16).

9. Dynamic-storage rack according to Claim 7, characterized in that the stop (15) is connected to the barrier via a drawing mechanism (19).

10. Dynamic-storage rack according to one of the preceding claims, characterized in that the running tracks (13) are designed as roller tracks.

## Revendications

1. Couloir de roulement destiné à la préparation de commandes d'unités de stockage (11), notamment sur une aire de transbordement, comportant des voies de roulement (13) disposées les unes au-dessus des autres, de préférence dans plusieurs plans, et inclinées vers le côté de préparation de commandes, sur lesquelles les unités de stockage (11) arrivent sous l'effet de la gravité du côté du chargement directement dans une position de prélèvement, et au moins un dispositif de blocage disposé sur les voies de roulement (13), au moyen duquel une unité de stockage (11) peut être arrêtée dans une position située en amont de la position de prélèvement dans la direction de déplacement,
caractérisé en ce que
le dispositif de blocage est formé par une équerre pouvant pivoter autour d'un axe de rotation fixe (5), qui est maintenue dans une position de base au moyen d'au moins un ressort, hors de laquelle elle peut être pivotée dans des sens de pivotement opposés en s'opposant à la force du ressort, le dispositif de blocage pouvant être dévié de la position de base en s'opposant à l'effet du ressort par le déplacement d'une unité de stockage (11) le long de la voie, et une unité de stockage (11) ayant été reculée de la position de prélèvement dans la position située en amont pouvant être arrêtée automatiquement entre les éléments (1, 2) de type branche du dispositif de blocage.

2. Couloir de roulement selon la revendication 1, caractérisé en ce que les éléments (1, 2) de type branche formant l'équerre du dispositif de blocage sont orientés suivant un angle droit l'un par rapport à l'autre.

3. Couloir de roulement selon la revendication 1 ou 2, caractérisé en ce que l'élément (2) de type branche du dispositif de blocage orienté dans la position de base vers le côté de préparation de commandes, est plus court que celui (1) opposé au côté de préparation de commandes.

4. Couloir de roulement selon l'une quelconque des revendications 1 à 3, caractérisé en ce que le dispositif de blocage est articulé avec un axe de rotation vertical (5) latéralement à la voie de roulement (13).

5. Couloir de roulement selon la revendication 4, caractérisé en ce que des dispositifs de blocage sont disposés des deux côtés de la voie de roulement (13).

6. Couloir de roulement selon l'une quelconque des revendications 1 à 5, caractérisé en ce que l'élément à ressort est un ressort à branches (6) enserré en fixe des deux côtés.

7. Couloir de roulement selon l'une quelconque des revendications 1 à 6, caractérisé en ce que, à une certaine distance du dispositif de blocage, il est prévu une butée (15) qui limite le mouvement de recul d'une unité de stockage (11) de la position de prélèvement en direction de la position située en amont.

8. Couloir de roulement selon la revendication 7, caractérisé en ce que la butée (15) est agencée sous la forme d'un volet (16) actionné par un ressort.

9. Couloir de roulement selon la revendication 7, caractérisé en ce que la butée (15) est reliée au dispositif de blocage par l'intermédiaire d'une transmission à moyen de traction (19).

10. Couloir de roulement selon l'une quelconque des revendications précédentes, caractérisé en ce que les voies de roulement (13) sont agencées sous la forme de transporteurs à galets.
